**Europäisches Patentamt**

**European Patent Office**

**Office européen des brevets**

(19)

(11) Veröffentlichungsnummer: **0 026 273**
**A2**

(12)  # EUROPÄISCHE PATENTANMELDUNG

(21) Anmeldenummer: 80103910.8

(22) Anmeldetag: 09.07.80

(51) Int. Cl.³: **G 03 B 7/085**
**G 03 B 9/07**

(30) Priorität: 01.10.79 DE 2939770

(43) Veröffentlichungstag der Anmeldung:
08.04.81 Patentblatt 81'14

(84) Benannte Vertragsstaaten:
AT BE CH DE FR GB IT LI LU NL SE

(71) Anmelder: Rollei-Werke Franke & Heidecke GmbH + Co
KG
Salzdahlumer Strasse 196
D-3300 Braunschweig(DE)

(72) Erfinder: Kranz, Gerhard, Dr. Ing.
Hegerdorfstrasse 22b
D-3300 Braunschweig(DE)

(74) Vertreter: Pretzell, Hellmut, Dipl.-Ing.
Salzdahlumer Strasse 196
D-3300 Braunschweig(DE)

(54) Fotografische Kamera.

(57) Es wird eine fotografische Kamera mit einem Antriebsglied für die Blende eines Kameraobjektivs, insbesondere
eines Wechselobjektivs, und mit einer das Antriebsglied stillsetzenden Stoppvorrichtung angegeben, bei welcher von der
Trägheit der Stoppvorrichtung bzw. des Antriebsgliedes herrührende Blendeneinstellfehler gänzlich vermieden oder
zumindest auf ein unbedeutendes Maß reduziert sind. Hierzu
ist auf der von den Magnetpolen (17, 18) des Elektromagneten
(16) der Stoppvorrichtung (15) abgekehrten Seite des Stoppelements (19) eine den Magnetpolen (17,18) unmittelbar
gegenüberliegende Ankerplatte (22) beweglich angeordnet,
und die Abmessung des Stoppelements (19), die sich im
wesentlichen quer zur Ankerplattenfläche erstreckt, sehr klein
bemessen, vorzugsweise auf ein nur von der mechanischen
Festigkeit begrenztes Maß reduziert. Das Stoppelement (19)
ist unmittelbar mit dem Antriebselement (13) fest verbunden
und die Ankerplatte (22) liegt mit Vorspannung an dem Stoppelement (19) an, wobei die Vorspannkraft für die Ankerplatte
(22) sehr klein gewählt ist.

Fig. 1

ROLLEI-WERKE
Franke & Heidecke
GmbH & Co KG

04.07.1980
A 1172 EU

Fotografische Kamera

Die Erfindung betrifft eine fotografische Kamera der im Oberbegriff des Anspruchs 1 definierten Art.

Bei einer bekannten Kamera dieser Art nach DE-OS 22 57 608.5 ist das Stoppelement als Bremsscheibe aus ferromagnetischem Material ausgebildet, die auf einer biegsamen Welle sitzt und an deren Umfang die Magnetpole des Elektromagneten mit geringem Spaltabstand angeordnet sind. Mit der Bremsscheibe ist ein Ritzel starr verbunden, das mit einer Zahnstange kämmt, die ihrerseits an dem als axial verschiebliche Schaltstange ausgebildeten Antriebsglied angeordnet ist. Der Elektromagnet wird von der Belichtungsmeßeinrichtung gesteuert und erhält einen Erregerstromimpuls, wenn die Blende die der herrschenden Objekthelligkeit entsprechende Stellung erreicht hat, das durch die verbleibende Blendöffnung hindurchfallende Licht also eine exakte Belichtung des fotografischen Bildes ergibt. Das bei Magneterregung an den Magnetpolen entstehende Magnetfeld schließt sich über die Bremsscheibe. Durch die biegsame Welle wird die Bremsscheibe angezogen und an den Polflächen des Elektromagneten mechanisch abgebremst. Die rotierende Bremsscheibe stellt also den Anker des Elektromagneten dar und ist ein Teil des magnetischen Kreises.

Bei einer solchen Stoppvorrichtung treten erhebliche Einstellfehler der Blende auf, d.h. Abweichungen der tatsächlichen Blendenstellung von der Sollblendenstellung, in welcher sich die Blende in dem Moment befunden hat, in welchem das Stoppsignal dem Elektromagneten zugeführt worden ist. Diese Einstellfehler liegen vor allem in der großen Masse der Bremsscheibe begründet, die nicht schlagartig - wie erforderlich - sondern nur mit einer gewissen Verzögerung stillgesetzt werden kann. Die Masse der Bremsscheibe kann aber nur in beschränktem Maße klein gehalten werden, da der sich über die Bremsscheibe schließende magnetische Fluß des Elektromagneten eine genügend große Dicke der Bremsscheibe erfordert. Darüber hinaus tragen noch Toleranzen zwischen der Zahnstange und dem Antriebsritzel für die Bremsscheibe zur Verzögerung des Einstellfehlers bei.

Der Erfindung liegt die Aufgabe zugrunde, eine Vorrichtung der eingangs genannten Art zu schaffen, bei welcher Blendeneinstellfehler aufgrund mechanischer oder elektromechanischer Spielfehler der Vorrichtung zur Blendensteuerung weitgehend reduziert bzw. nahezu völlig beseitigt sind.

Diese Aufgabe ist bei einer Vorrichtung der im Oberbegriff des Anspruchs 1 definierten Gattung erfindungsgemäß durch die Merkmale im Kennzeichnungsteil des Anspruches 1 gelöst.

Bei der erfindungsgemäßen Kamera besitzt das Stoppglied eine minimale Masse mit entsprechend geringer Trägheit, ohne daß dadurch der Magnetkern des Elektromagneten negativ beeinflußt wird. Das Stoppelement kann schlagartig und unverzüglich festgehalten werden. Ein Überschwingen des Stoppbandes, wie es bei der bekannten Bremsscheibe zu beobachten ist, tritt nicht auf.

Besonders vorteilhaft ist dabei die Ausführungsform der Erfindung gemäß Anspruch 2. Durch die unmittelbare und starre Verbindung des Stoppelements mit dem Antriebsglied lassen sich selbst Antriebsglieder mit relativ großer Masse schnell und schlagartig abbremsen. Ein Überlaufen der Blende über die Soll-Blendenöffnung ist damit auch hier sicher vermieden.

Eine vorteilhafte Ausführungsform der Erfindung sieht Anspruch 3 vor. Durch diese Maßnahme weist die Ankerplatte einen Abstand von den Polflächen auf, der ausschließlich von dem sehr dünnen Stoppelement bestimmt ist. Damit hat der Elektromagnet praktisch keinen Arbeitshub und folglich eine extrem geringe Reaktionszeit.

Eine vorteilhafte Ausführungsform der Erfindung ergibt sich auch aus Anspruch 4. Durch diese Ausbildung des Stoppelements als dünnes Stoppband wird ein konstruktiv einfacher Aufbau der Stoppvorrichtung erzielt, der auch eine weitgehend massearme Ausbildung des Antriebsgliedes ermöglicht.

Dabei ist vorteilhaft die Ausführungsform der Erfindung gemäß Anspruch 5. Durch das Spannelement wird einerseits das massearme Stoppband immer straff gehalten und andererseits kann die Masse des Spannelements den Stoppvorgang in keiner Weise beeinflussen.

Eine vorteilhafte Ausführungsform der Erfindung sieht Anspruch 6 vor. Dadurch erhält man auch ein relativ wenig träge Masse aufweisendes Antriebsglied, das ohne Überschwingen schnell und augenblicklich von dem Stoppband festgesetzt werden kann.

Eine besonders vorteilhafte Ausführungsform der Erfindung ergibt sich jeweils aus den Ansprüchen 8-10. Ein solches Hemmwerk hat den wesentlichen Vorteil, daß eine bestimmte, durch die Konstruktion der Objektive, insbesondere der verschiedenartigen Wechselobjektive, bedingte Blendenöffnungs-Charakteristik eingehalten werden kann. Untersuchungen von Wechselobjektiven verschiedener Typen und Fabrikate,bei denen die Blendenöffnung mittels eines axial im Objektiv verschiebbaren Blendenstößels eingestellt wird, haben ergeben, daß bei jedem Objektiv die Funktion der Blendenöffnung in Abhängigkeit vom Stößelweg einen unterschiedlichen Verlauf aufweist. Dabei hat sich auch gezeigt, daß der Blendenstößel nicht mit beliebiger Geschwindigkeit angetrieben werden darf, sondern die Weg-Zeit-Funktion des Blendenstößels eine bestimmten charakteristischen Verlauf aufweisen muß, denn andernfalls stimmen Blendenöffnung und Blendenstößelweg nicht mehr exakt miteinander überein, wobei z.B. die Blendenöffnung einen geringen Vorlauf vor den Blendenstößelweg erhalten kann. In diesem Fall würde dann z.B. die Stoppvorrichtung bei Erreichen der Soll-Blendenöffnung das Antriebsglied und damit den Blendenstößel schlagartig stillsetzen. Da aber die die Blendenöffnung bildenden Blendenlamellen nicht exakt an dem Blendenstößel angelegen haben, sondern infolge ihrer Geschwindigkeit gegenüber diesem einen gewissen Vorlauf hatten, fallen diese nach Festsetzen des Blendenstößels zurück und die Blendenöffnung wäre in Abweichung von der Soll-Blendenöffnung zu groß bzw. zu klein. Einstellfehler in umgekehrter Richtung treten auf. Durch entsprechende Auslegung des erfindungsgemäßen Hemmwerkes kann für alle Wechselobjektive eine bestimmte ideale Geschwindigkeitssteuerung des Antriebsgliedes und damit des Blendenstößels erfolgen, die in vorteilhafter Weise nach einer Anlaufphase zunächst sehr groß ist und mit zunehmendem Verschiebeweg des Blendenstößels abnimmt.Durch das jenseits des Elektromagneten an dem Spannelement für das Stoppband angreifende Hemmwerk wird jeglicher Einfluß des üblicherweise mit großer Masse behafteten Hemmwerks auf den Stoppvorgang des Antriebsgliedes ausgeschaltet. Die erfindungsgemäße Stopp- und Antriebsvorrichtung für die Objektivblende wird damit durch Einführen des Hemmwerks in ihrer vorteilhaften Wirkungsweise nicht beeinträchtigt.

Eine vorteilhafte Ausführungsform der Erfindung zeichnet sich dadurch aus, daß das Federelement zum Spannen des Stoppbandes als Blattfeder ausgebildet ist, die mit einem Ende auf der von der Antriebsschwinge abgekehrten Seite des Schwenkhebels an diesem befestigt und mit dem anderen, freien Ende von diesem absteht, und daß das Stoppband durch eine Durchtrittsöffnung im Schwenkhebel hindurchgeführt und an dem freien Ende der Blattfeder gehalten ist. Durch diese konstruktiven Maßnahmen ist es möglich, den erforderlichen Einbauraum für die Antriebs- und Stoppvorrichtung in der Kamera sehr klein zu halten.

Eine vorteilhafte Ausführungsform der Erfindung zeichnet sich dadurch aus, daß das Stoppelement mehrere Stoppbänder aufweist, die parallel zu den Polflächen der Magnetpole in Abstand voneinander angeordnet sind, und daß zwischen den Stoppbändern im Bereich der Magnetpole, Flußleitstücke aus weichmagnetischem Material angeordnet sind. Durch diese Maßnahme lassen sich bei gleicher Durchflutung der Erregerspule des Elektromagneten höhere Bremskräfte erzielen.

In einer weiteren, vorteilhaften Ausführungsform der Erfindung sind die Stoppbänder über mindestens ein, vorzugsweise als feste Rolle ausgebildetes mechanisches Differential miteinander verbunden, das an dem Antriebsglied und/oder an dem Spannelement gehalten ist. Damit ist eine gleichmäßige Spannung aller Stoppbänder sichergestellt.

In einer weiteren Ausführungsform der Erfindung ist ein die Magnetkraft des Elektromagneten unterstützender mechanischer Kraftverstärker vorgesehen. Schon bei geringster Erregung des Elektromagneten setzt eine Selbsthemmung des Stoppelementes durch Verklemmen von Ankerplatte und Magnetpolen ein. Dies ermöglicht eine weitgehende Reduzierung der Magnetkraft des Elektromagneten und damit einen geringen Energiebedarf, was die Lebensdauer der Kamerabatterie wesentlich erhöht.

Gemäß einer weiteren vorteilhaften Ausführungsform der Erfindung wird ein solcher Kraftverstärker dadurch realisiert, daß die Ankerplatte auf einem ortsfest schwenkbeweglich gelagerten Stützhebel gelenkig angeordnet ist, der unter einem spitzen Winkel zur Längsrichtung des Stoppbandes entgegen dessen Bewegungsrichtung geneigt ist. Dieser Winkel und die Vorspannkraft, mit welcher die Ankerplatte an dem Stoppband anliegt, werden derart eingestellt, daß im nicht erregten Zustand des Elektromagneten gerade noch kein selbsttätiges Verklemmen und zwischen den Polflächen des Elektromagneten und der Ankerplatte auftritt.

In einer weiteren vorteilhaften Ausführungsform der Erfindung ist ein solcher Kraftverstärker dadurch realisiert, daß der Elektromagnet ein zylindrisches, geschlitztes Joch mit im Jochschlitz einander gegenüberliegenden Polflächen aufweist, daß das Stoppband in Form eines Schlingbandes mit vorzugsweise einem Schlingwinkel größer als 360° um das Joch gelegt ist und daß die Ankerplatte am Umfang des Jochs den Jochschlitz überdeckend, auf dem auf das Joch auflaufende Teil des Stoppbandes aufliegt. Auch bei einem solchen Aufbau des mechanischen Kraftverstärkers nach Art eines Schlingbandgetriebes tritt eine Selbsthemmung des Stoppbandes dadurch auf, daß im Augenblick der Magneterregung durch die Bewegung des Stoppbandes die mit geringer Anpreßkraft auf dem Joch aufliegende Ankerplatte schlagartig auf das Joch mechanisch aufgepreßt wird.

Eine von der Lösung nach Anspruch 1 unabhängige Lösung der Teilaufgabe der Verkürzung der Bremszeit zeichnet sich dadurch aus, daß die Erregerspule mit einer Windungsanzapfung versehen ist, und daß eine Schaltungsanordnung vorgesehen ist, die bei Auftreten eines Stoppsignals für den Elektromagneten den über
die Windungsanzapfung abgegriffenen  Teil der Erregerspule kurzzeitig an die volle Gleichspannung legt. Durch diese
erfindungsgemäße Maßnahme erhält man eine Schnellerregung
des Elektromagneten, die die Reaktionszeit der erfindungsgemäßen Stoppvorrichtung noch weiter beträchtlich reduziert.

Gemäß einer weiteren Ausführungsform der Erfindung kann
eine solche Schnellerregung des Elektromagneten dadurch
erzielt werden, daß die Erregerspule in Reihe mit einem
Transistor  an die Stromversorgungsquelle angeschlossen
ist, daß die Basis des Transistors, vorzugsweise über
einen Widerstand, mit einem Stoppsignal-Eingang verbunden
ist  und daß die Schaltungsanordnung einer zwischen Erregerspule und Transistor eingeschaltete Diode und einen zweiten
Transistor aufweist, der der Reihenschaltung aus Rest-
Erregerspule, Diode und erstem Transistor parallelgeschaltet ist und dessen Basis über ein RC-Glied an den
Stoppsignal-Eingang angeschlossen ist. Unter Rest-Erregerspule wird hier derjenige Teil der Erregerspule verstanden,
der nicht von der Windungsanzapfung abgegriffen wird,
hier also zwischen Windungsanzapfung und Ausgang der Erregerspule liegt.

In einer weiteren Ausführungsform der Erfindung wird die
Schnellerregung des Elektromagneten dadurch bewirkt, daß
die Erregerspule in Reihe mit einem Transistor an die
Stromversorgungsquelle angeschlossen ist, daß die Basis
des Transistors, vorzugsweise über einen Widerstand, mit
einem Stoppsignal-Eingang verbunden ist, und daß die
Schaltungsanordnung eine zwischen Erregerspule und
Transistor eingeschaltete Diode und einen Kondensator
aufweist, der der Reihenschaltung aus Rest-Erregerspule
und Diode parallelgeschaltet ist. Der Stoppsignal-Eingang
ist üblicherweise mit dem Ausgang einer sog. Blendenautomatik verbunden, die in Abhängigkeit von der eingestellten Belichtungszeit, der eingestellten Filmempfindlichkeit, der Objekthelligkeit und der Ist-Blendenöffnung während des Schließvorganges der Blende ein Ausgangssignal - das sog. Stoppsignal für die Stoppvorrichtung - erzeugt, sobald die Ist-Blendenöffnung mit der
aus Belichtungszeit, Filmempfindlichkeit und Objekthelligkeit ermittelten Soll-Blendenöffnung übereinstimmt.

Eine von der Lösung nach Anspruch 1 unabhängige Lösung
der Teilaufgabe der Verkürzung der Bremszeit ist durch
die zusätzliche Verwendung der Stoppvorrichtung als eine
die Antriebsbewegung des Antriebsgliedes regelnde elektromagnetische Bremse gekennzeichnet. Durch diese Maßnahme läßt sich ein mechanisches Hemmwerk zur Erzielung
eines bestimmten Weg-Zeit-Verhaltens des Antriebsgliedes
für die Objektivblende einsparen und die ohnehin vorhandene Stoppvorrichtung als elektromagnetisches Hemmwerk
zur Steuerung der Geschwindigkeit des Antriebsgliedes
verwenden. Dies erbringt eine erhebliche Einsparung von
Bauelementen, was sowohl zur Senkung der Fertigungskosten als auch zur Verringerung des erforderlichen Bauraums für die Blendenantriebs- und Stoppvorrichtung
führt.

Vorteilhaft ist hierbei in einer weiteren Ausführungsform
der Erfindung mit dem Antriebsglied ein Geschwindigkeitssensor gekuppelt und mit diesem und der Erregerspule des
Elektromagneten ein Regler verbunden, der entsprechend der
gewünschten Antriebsbewegung des Antriebsgliedes die Größe
des Erregerstromes in der Erregerspule bestimmt. Solange
die Geschwindigkeit des selbsttätig ablaufenden Antriebsgliedes einen gewünschten Verlauf der Blendenbewegung bewirkt, ist die Erregerspule des Elektromagneten stromlos. Wird die Antriebsgeschwindigkeit des Antriebsgliedes größer als es die geforderte Blenden-Bewegungscharakteristik erfordert, so wird je nach Größe der Abweichung ein entsprechend großer Erregerstrom in der Erregerspule fließen. Entsprechend der Erregung des Elektromagneten wird die Ankerplatte mehr oder weniger stark angezogen und das Stoppband zwischen der Ankerplatte und den Polflächen der Magnetpole geklemmt. Hierdurch erfolgt eine Bremsung des Stoppbandes und damit eine Bremsung des Antriebsgliedes. Über den Regler kann das Stoppband so gebremst werden, daß die Geschwindigkeit des Antriebsgliedes exakt des geforderten Weg-Zeit-Gesetzes der Schließ- bzw. Öffnungsbewegung der Blende entspricht.

In einer vorteilhaften Ausführungsform der Erfindung weist der Geschwindigkeitssensor eine Lichtschranke, die die Bewegung einer mit dem Antriebsglied gekuppelten, vorzugsweise mit dem Stoppband verbundenen, Fahne abtastet und der Regler einen Differenzierer und einen an dessen Ausgang angeschlossenen Spannungs-Strom-Wandler auf, dessen Ausgang mit der Erregerspule verbunden ist. Am Ausgang des Differenzierers erhält man somit ein geschwindigkeitsproportionales Spannungssignal, das in dem Spannungs-Strom-Wandler in einen entsprechenden Erregerstrom für den Elektromagneten umgewandelt wird.

Gemäß einer weiteren Ausführungsform der Erfindung liefert der Geschwindigkeitssensor unmittelbar - ohne Differenzieren im Regler - ein geschwindigkeitsproportionales Signal, wobei zusätzlich der Proportionalitätsfaktor eine Funktion des Verstellweges der Objektivblende ist.

In einer weiteren Ausführungsform der Erfindung ist dabei vorteilhaft vorgesehen, daß der Geschwindigkeitssensor ein Flach- oder Tauchspulsystem mit einer ortsfesten Spule und einem mit dem Antriebsglied gekuppelten, vorzugsweise mit dem Stoppband verbundenen, Permanentmagneten oder

umgekehrt aufweist, daß an der Spule eine der Geschwindigkeit des Antriebsglieds proportionale Spannung abgegriffen und dem Regler zugeführt ist und daß der permanentmagnetische Kreis derart ausgebildet ist, daß der Proportionalitätsfaktor eine Funktion des Verstellweges der Objektivblende ist. Hier braucht der Regler im wesentlichen nur noch einen Spannungs-Strom-Wandler zu enthalten, der das geschwindigkeitsproportionale Spannungssignal in einen Erregerstrom bestimmter Größe für die Erregerspule des Elektromagneten umsetzt.

Soweit der vollständige Wortlaut der Ansprüche vorstehend nicht wiedergegeben, sondern statt dessen lediglich durch Nennung der Anspruchsnummern darauf Bezug genommen worden ist, ist dies allein zur Vermeidung unnötiger Wiederholungen erfolgt. Die Anspruchsmerkmale haben jedoch durch diese Bezugnahme auf die Anspruchsnummern als an dieser Stelle ausdrücklich und erfindungswesentlich offenbart zu gelten.

Die Erfindung ist anhand von in den Zeichnungen dargestellten Ausführungsbeispielen im folgenden näher beschrieben. Es zeigen in schematischer Darstellung:

Fig. 1    eine Seitenansicht einer Antriebsvorrichtung für die Blende mit einer Stoppvorrichtung gemäß einem ersten Ausführungsbeispiel,

Fig. 2    eine Seitenansicht einer Antriebsvorrichtung für die Blende mit einer Stoppvorrichtung gemäß einem zweiten Ausführungsbeispiel,

Fig. 3    ausschnittweise eine Ansicht in Richtung Pfeil III der Antriebsvorrichtung mit Stoppvorrichtung in Fig. 2,

Fig. 4    eine Seitenansicht einer Stoppvorrichtung gemäß einem dritten Ausführungsbeispiel,

0026273

- 11 -

Fig. 5    eine Seitenansicht einer Stoppvorrichtung
          gemäß einem vierten Ausführungsbeispiel,

Fig. 6    eine Draufsicht der Stoppvorrichtung gemäß
          Pfeil VI in Fig. 5,

Fig. 7    einen Schaltplan einer Schaltungsanordnung
          für den Elektromagneten in der Stoppvorrichtung nach einem der Fig. 1 - 6,

Fig. 8    einen Schaltplan einer Schaltungsanordnung
          für den Elektromagneten der Stoppvorrichtung
          in einer der Fig. 1 - 6, gemäß einem zweiten
          Ausführungsbeispiel,

Fig. 9    eine Seitenansicht einer Antriebsvorrichtung
          mit Stoppeinrichtung gemäß einem fünften
          Ausführungsbeispiel,

Fig. 10   einen Schaltplan eines Reglers in der Antriebs-
          vorrichtung gemäß Fig. 9,

Fig. 11   eine Seitenansicht einer Antriebsvorrichtung
          mit Stoppvorrichtung gemäß einem sechsten
          Ausführungsbeispiel.

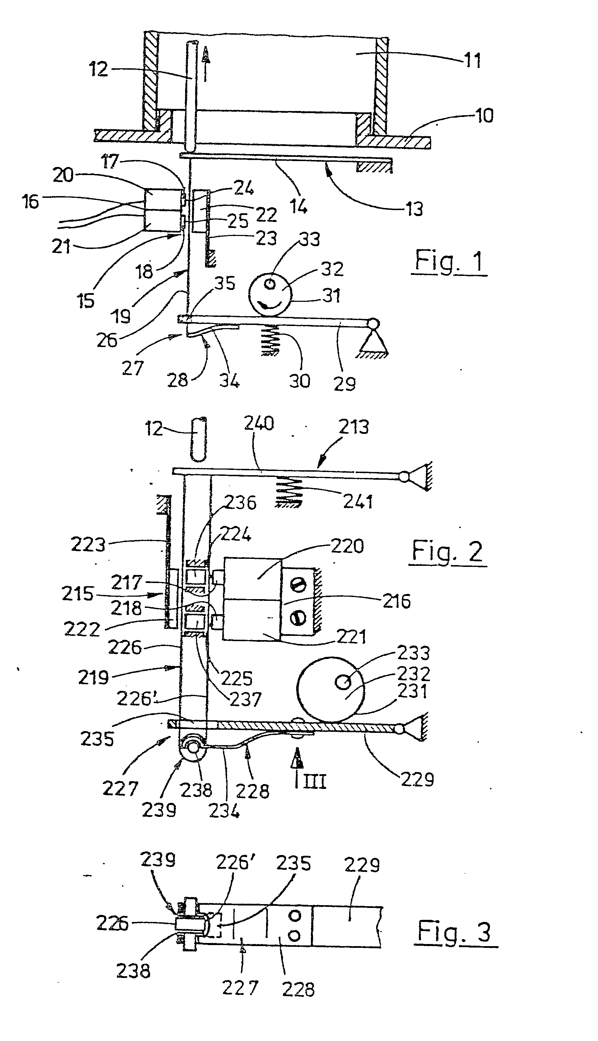

Die in den Figuren dargestellte Antriebsvorrichtung mit
Stoppvorrichtung ist im Innern eines Kameragehäuses 10
(Fig. 1) angeordnet. Ein in Fig. 1 angedeutetes Wechselobjektiv 11 ist in bekannter Weise auf das Kameragehäuse 10
aufgeschraubt. Im Wechselobjektiv 11 ist ein Blendenstößel
12 axial verschieblich geführt. Über diesen Blendenstößel 12
können die hier nicht gezeigten Blendenlamellen des Wechselobjektivs aus einer Blendenschließstellung in eine Blendenoffenstellung überführt werden oder umgekehrt. Zwischen Verschiebeweg des
Blendenstößels 12 und dem Durchmesser der Blendenöffnung
besteht dabei ein festes, von der Objektivkonstruktion vorgegebenes Verhältnis.

Die Antriebsvorrichtung weist ein Antriebsglied 13 für den Blendenstößel 12 auf, das in Fig. 1 als in Antriebsrichtung (Pfeil A) des Blendenstößels 12 vorgespannte Blattfeder 14 ausgebildet ist. Bei aufgeschraubtem Wechselobjektiv 11 liegt die Blattfeder 14 in ihrer Grundstellung unmittelbar am freien Ende des Blendenstößels 12 an, wobei die Blende ihre Offenstellung einnimmt.

An dem Antriebsglied 13 greift eine Stoppvorrichtung 15 an, die einen Elektromagneten 16 mit Magnetpolen 17 und 18 und ein mit dem Antriebsglied 13 gekuppeltes Stoppelement 19 aufweist. Das Stoppelement 19 bewegt sich an den Magnetpolen 17,18 entlang und kann durch Erregung der beiden Erregerspulen 20,21 des Elektromagneten 16 festgesetzt werden. Auf der von den Magnetpolen 17,18 abgekehrten Seite des Stoppelements 19 ist hierzu eine den Magnetpolen 17,18 unmittelbar gegenüberliegende Ankerplatte 22 beweglich angeordnet, die mit Vorspannung an dem Stoppelement 19 anliegt. In einfacher Weise kann,wie in Fig. 1 gezeigt,hierbei die Ankerplatte 22 auf einer ortsfest gelagerten Blattfeder 23 befestigt sein. Die Blattfeder 23 ist dabei so ausgebildet, daß die Vorspannkraft für die Ankerplatte 22 sehr klein ist, die Reibkraft zwischen Ankerplatte 22 und Stoppelement 19 einerseits und den Magnetpolen 17,18 und dem Stoppelement 19 andererseits bei unerregtem Elektromagneten 16 ebenfalls sehr klein ist. Das Stoppelement 19 ist unmittelbar mit dem Antriebselement 13 fest verbunden und derart ausgebildet, daß seine im wesentlichen rechtwinklig zu der Ankerplattenfläche gesehene Abmessung sehr klein, vorzugsweise auf ein nur von der mechanischen Festigkeit begrenztes Maß reduziert ist.

Bei dem Ausführungsbeispiel in Fig. 1 ist das Stoppelement 19 als ein gespanntes, unelastisches, dünnes Stoppband 26 ausgebildet, das vorzugsweise aus metallischem Material mit ferromagnetischen Eigenschaften besteht und das an einem Ende an dem Antriebsglied 13 gehalten ist. Am anderen Ende des Stoppbandes 26 greift ein dieses straff haltendes Spannelement 27 an. Das Spannelement 27 weist ein Federelement 28 auf, dessen Federkraft kleiner als die Vorspannkraft der Antriebs-Blattfeder 14 und dieser entgegengerichtet ist. Das Federelement 28 ist dabei auf einem in Antriebsrichtung der Antriebs-Blattfeder 14 vorgespannten Schwenkhebel 29 angeordnet. Unter dem Druck einer in Antriebsrichtung der Antriebs-Blattfeder 14 wirkenden Druckfeder 30 liegt der Schwenkhebel 29 an der Steuerkurve 31 eines mechanischen Hemmwerks 32 an. Das Hemmwerk 32 steuert die Geschwindigkeit des selbsttätig ablaufenden Antriebsgliedes 13, d.h. der Antriebs-Blattfeder 14, nach einer vorgegebenen Funktion, die eine entsprechende Blendenstößel-Geschwindigkeit erzeugt, wie sie vom Blendenmechanismus des Wechselobjektivs 11 gefordert wird. Üblicherweise ist die Blendenstößelcharakteristik nicht linear, so daß der Blendenstößel 12 nach einer Anlaufphase zunächst mit großer Geschwindigkeit angetrieben wird, die zu kleineren Blendenöffnungen hin zunehmend kleiner werden muß. Eine solche nicht lineare Weg-Zeit-Charakteristik des Antriebsgliedes 13 läßt sich mit der Steuerkurve 31 des Hemmwerks 32 erzielen, die um eine exzentrisch angeordnete Achse 33 rotiert. Das Federelement 28 zum Spannen des Stoppbandes 26 ist auf der von der Antriebs-Blattfeder 14 abgekehrten Seite des Schwenkhebels 29 an diesem befestigt. Vorzugsweise ist das Federelement, wie hier, als Blattfeder 34 ausgebildet, die mit einem Ende auf dem Schwenkhebel 29 befestigt ist, mit ihrem freien Ende von diesem absteht und das durch eine Durchtrittsöffnung 35 im Schwenkhebel 29 hindurchgeführte Stoppband 26 hält.

Unmittelbar vor dem Blendeneinstellvorgang nimmt die Antriebsvorrichtung und die Stoppvorrichtung 15 die in Fig.1 dargestellte Lage ein. Bei Auslösung eines Blendeneinstellvorgangs wird sich zunächst die Steuerkurve 31 des Hemmwerks 32 in Pfeilrichtung drehen. Die Antriebs-Blattfeder 14, die über das Stoppband 26 mit dem Schwenkhebel 29 verbunden ist, schwenkt nunmehr aufgrund ihrer Vorspannung in Antriebsrichtung des Blendenstößels 12 (Pfeil A in Fig. 1). Damit wird der Blendenstößel 12 in Richtung Pfeil A verstellt und die Blende des Wechselobjektivs 11 schließt sich allmählich. Die Antriebsgeschwindigkeit der Antriebs-Blattfeder 14 am Blendenstößel 12 wird über das Stoppband 26 und den Schwenkhebel 29 von der Steuerkurve 31 des Hemmwerks 32 gesteuert. Sobald die Soll-Blendenöffnung erreicht ist, die von einer sog. Blendenautomatik aus der vorgegebenen Belichtungszeit, der eingestellten Filmempfindlichkeit und der herrschenden Objekthelligkeit errechnet wird, gibt die Blendenautomatik ein Stoppsignal an den Elektromagneten 16 ab. Die Erregerspulen 20,21 des Elektromagneten werden mit einem Gleichstrom durchflossen, der Elektromagnet 16 zieht die Ankerplatte 22 mit verhältnismäßig großer Kraft an, und das Stoppband 26 wird von der Ankerplatte 22 gegen die Polflächen 24,25 der Magnetpole 17,18 gepreßt. Damit wird das Stoppband augenblicklich und verzögerungsfrei still-gesetzt, und dieses bremst schlagartig die Antriebs-Blattfeder 14 ab. Die Bewegung des Blendenstößels 12 und damit das Öffnen bzw. Schließen der Blende wird damit in dem gleichen Augenblick beendet, in welchem die Blendenautomatik das Stoppsignal erzeugt. Ungeachtet des Festsetztens des Stoppbandes 26 wird sich die Steuerkurve 31 des Hemmwerks 32 weiter drehen. Durch die Druckfeder 30 folgt der Schwenkhebel 29 der Bewegung der Steuerkurve 31 und schwenkt weiter - wenn auch geringfügig - im Uhrzeigersinn. Durch das Federelement 28 in Form der Blattfeder 34 auf dem Schwenkhebel 29 wird trotz Verschwenken des Schwenkhebels 29 der zwischen Elektromagnet 16 und Federelement 28 befindliche Teil des Stoppbandes 26 gespannt gehalten.

Das in Fig. 2 dargestellte Ausführungsbeispiel einer Antriebsvorrichtung mit Stoppvorrichtung unterscheidet sich von dem Ausführungsbeispiel gemäß Fig. 1 nur dadurch, daß das Stoppelement 219 der Stoppvorrichtung 215 mehrere, hier zwei, Stoppbänder 226, 226' aufweist, die parallel zu den Polflächen 224,225 der Magnetpole 217,218 in Abstand voneinander angeordnet sind. Zwischen den Stoppbändern 226, 226' sind im Bereich der Magnetpole 217,218 Flußleitstücke236,237 aus weichmagnetischem Material angeordnet. Im übrigen ist die Antriebsvorrichtung und die Stoppvorrichtung identisch, so daß gleiche Bauelemerte mit gleichen Bezugszeichen, jedoch um die Zahl 200 erhöht, versehen sind. Um die beiden Stoppbänder 226,226' immer gespannt halten zu können, ist ein als feste Rolle 238 ausgebildetes mechanisches Differential 239 vorgese'en,das an dem Spannelement 227,hier an dem Federelement 228, angeordnet ist. Das mechanische Differential 239 kann ebenso an dem Antriebsglied 213 gehalten sein. Dies ist jedoch nicht so zweckmäßig, da hierdurch die sich bewegende und durch die Stoppeinrichtung 215 zu bremsende Masse unnötigerweise vergrößert wird. Das Antriebsglied 213 in Fig. 2 ist hier als federbelastete Schwinge 240 ausgebildet, die im Gehäuse ortsfest gelenkig gelagert ist und von einer Druckfeder 241 in Antriebsrichtung des Blendenstößels 12 beaufschlagt ist. Die Wirkungsweise dieser Antriebsvorrichtung mit Stoppvorrichtung 215 ist die gleiche wie vorstehend beschrieben. Durch die Anordnung der beiden Stoppbänder 226,226' führt die gleiche Gesamtdurchflutung der Erregerspule 220,221 des Elektromagneten 216 zu größeren Bremskräften. Die Flußleitstücke 236,237 sind so angebracht, daß sie sich nur längs der Normalen der Polflächen 224,225 frei einstellen können. Die Stoppbänder 226,226' können noch vervielfacht werden, wobei jeweils ein entsprechendes mechanisches Differential 239 immer abwechselnd an dem Spannelement 228 und an dem Antriebsglied 213 angebracht werden muß.

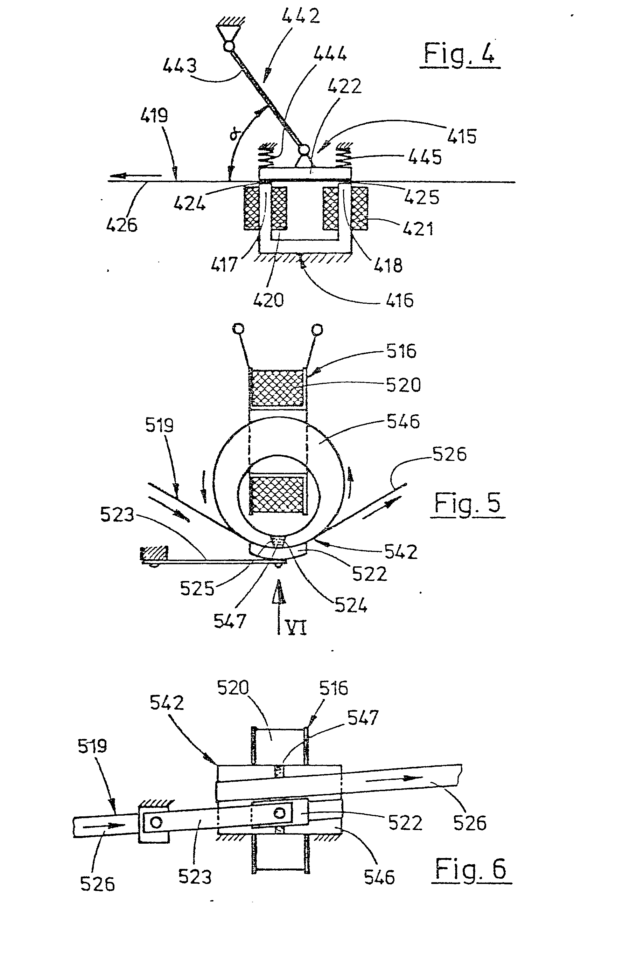

In den Ausführungsbeispielen einer Stoppvorrichtung gemäß den Fig. 4 - 6 sind die Stoppvorrichtungen mit einem mechanischem Kraftverstärker versehen. Diese Kraftverstärker wirken in gleicher Richtung wie die Magnetkraft des Elektromagneten, so daß letztlich der Elektromagnet kleiner bemessen werden kann, wodurch sein Leistungsbedarf sinkt und die Kamerabatterie weitgehend geschont wird. Bauteile der Stoppvorrichtung in Fig. 4 und 5 sind, soweit sie mit gleichen Bauteilen in Fig. 1 übereinstimmen, mit den gleichen Bezugszeichen versehen, die jedoch jeweils um 400 bzw. 500 erhöht sind.

Der Kraftverstärker 442 in Fig. 4 ist dadurch gebildet, daß die Ankerplatte 422 der Stoppvorrichtung 415 auf einem ortsfest schwenkbeweglich gelagerten Stützhebel 443 gelenkig angeordnet ist. Mittels zweier Andruckfedern 444,445 mit geringer Anpreßkraft wird die Ankerplatte 422 gegen das Stoppelement 419, das ebenfalls als Stoppband 426 ausgebildet ist, angedrückt und dieses seinerseits an die Polflächen 424 und 425 der Magnetpole 417,418 angelegt. Der Stützhebel 443 ist unter einem spitzen Winkel $\alpha$ zur Längsrichtung des Stoppbandes 426 gegen dessen Bewegungsrichtung geneigt. Der Winkel $\alpha$ und die geringe Vorspannkraft der Andruckfedern 444 und 445 sind so eingestellt, daß im nicht erregten Zustand des Elektromagneten 416 gerade noch kein selbsttätiges Verklemmen ( Selbsthemmung) bei Bewegung des Stoppbandes 426 zwischen den Polflächen 424, 425 der Magnetpole 417,418 und der Ankerplatte 422 auftritt. Bei geringster Erregung des Magneten 416 tritt Klemmen und somit Stillstand des Stoppbandes 426 ein.

In dem Ausführungsbeispiel gemäß Fig. 5 und 6 ist der Kraftverstärker 542 dadurch realisiert, daß der Elektromagnet 516 ein zylindrisches geschlitztes Joch 546 mit einander im Jochschlitz 547 gegenüberliegenden Polflächen 524 und 525 aufweist. Das Stoppband 526 ist in Form eines Schlingbandes mit vorzugsweise einem Schlingwinkel größer $360^{o}$ um das Joch 546 gelegt. Die der Jochkrümmung angepaßte Ankerplatte 522 liegt am Umfang des Jochs 546, den Jochschlitz 547 überdeckend, auf dem auf das Joch auflaufenden Teil des Stoppbandes 526 auf. Die Ankerplatte 522 ist wiederum mittels einer Blattfeder 523 unter geringer Vorspannung auf das um das Joch 547 gewickelte Stoppband 526 aufgelegt. Die Erregerspule 520 umgibt in diesem Fall sowohl das Joch 546 als auch das Stoppband 526. Die Auflagekraft der Ankerplatte 522 auf dem Stoppband 526 und damit auf dem Joch 546 und der Schlingwinkel des Stoppbandes sind nun derart gewählt, daß bei nicht erregtem Elektromagneten 516 Selbsthemmung gerade vermieden wird. Zur Vergrößerung der mechanischen Stabilität kann der Jochschlitz 547 mit magnetisch nicht leitendem Material gefüllt sein. Zur Verringerung der magnetischen Streuung kann die von der Ankerplatte 522 nicht bedeckte, in Fig. 6 obere Hälfte des Jochs 547 aus magnetisch nicht leitendem Material bestehen.

Um die Erregungszeit des Elektromagneten zu verkürzen, also um dessen Ansprechen zu beschleunigen, kann bei den vorstehend beschriebenen Stoppvorrichtungen 19,219,419 und 519 noch eine sog. Schnellerregung des Elektromagneten 16,216, 416,516 vorgesehen werden. Im folgenden wird eine solche Schnellerregung im Zusammenhang mit der Stoppvorrichtung 19 in Fig. 1 beschrieben. Sie gilt aber gleichermaßen für die anderen Stoppvorrichtungen gemäß den Ausführungsbeispielen in Fig. 2 - 6.

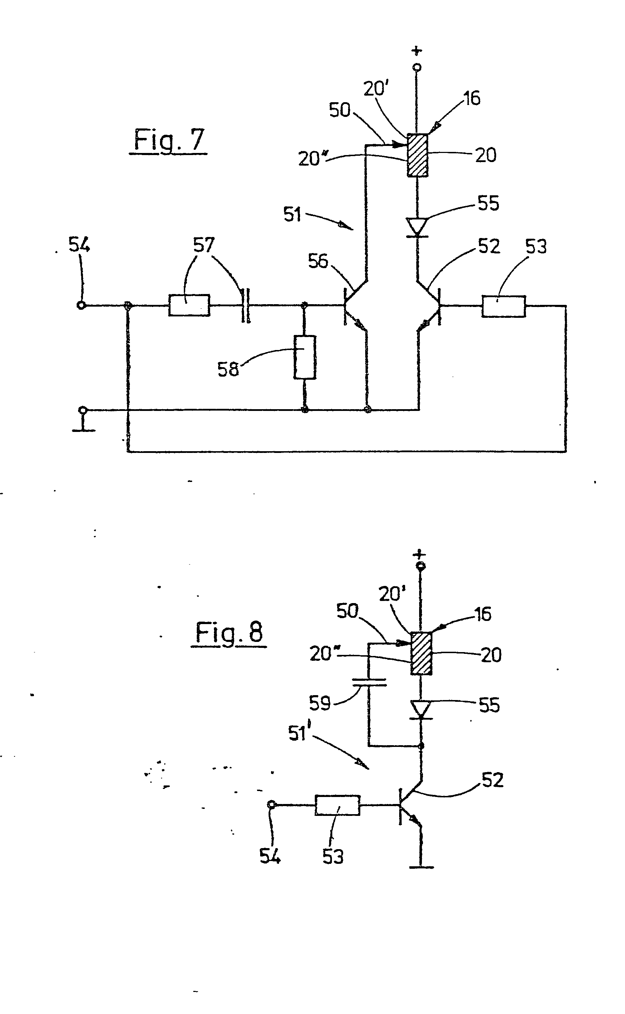

Der Schaltplan für eine solche Schaltungsanordnung zur Schnellerregung ist in den Fig. 7 und 8 in zwei Ausführungsbeispielen dargestellt. In beiden Fällen weist der Elektromagnet 16 eine Erregerspule 20 auf, die an eine Stromversorgungsquelle mit vorgegebener Gleichspannung anschließbar ist. Die Stromversorgungsquelle ist in Fig.7 und 8 mit dem "+"-Symbol und dem Erdpotential-Symbol gekennzeichnet. Die Erregerspule 20 weist eine Windungsanzapfung 50 auf, mittels welcher ein Teil 20' der Erregerspule 20 abgegriffen werden kann. Mit dieser Windungsanzapfung 50 ist eine Schaltungsanordnung 51 in Fig. 7 bzw. 51'in Fig.8 verbunden, die bei Auftreten eines Stoppsignals für den Elektromagneten 16 den über die Windungsanzapfung 50 abgegriffenen Teil 20' der Erregerspule 20 kurzzeitig an die volle Gleichspannung legt. .
Zum Anschließen der Erregerspule 20 an die Stromversorgungsquelle ist ein Transistor 52 mit der Erregerspule
in Reihe parallel zu der Stromversorgungsquelle geschaltet.
Die Basis des Transistors 52 ist über einen Widerstand 53
mit einem Stoppsignal-Eingang 54 verbunden, der üblicherweise an den Ausgang der sog. Blendenautomatik angeschlossen
ist und an dem ein Stoppsignal in dem Zeitpunkt auftritt,
in welchem bei dem Blendeneinstellvorgang die Ist-Blendenöffnung mit der Soll-Blendenöffnung übereinstimmt. Die
beiden Schaltungsanordnungen 51 bzw. 51' weisen in Übereinstimmung eine Diode 55 auf, die zwischen der Erregerspule 20 und dem Transistor 52 eingeschaltet ist, und zwar
ist die Anode der Diode 55 mit der Erregerspule 20 und die
Kathode mit dem Transistor 52 verbunden.

Die Schaltungsanordnung 51 gemäß Fig. 7 weist einen zweiten
Transistor 56 auf, der der Reihenschaltung von Rest-Erregerspule 20'' (der Teil der Erregerspule 20, der nicht von der
Windungsanzapfung 50 abgegriffen ist), Diode 55 und erstem
Transistor 52 parallelgeschaltet ist. Die Basis des
zweiten Transistors 56 ist über ein RC-Glied 57 mit dem
Stoppsignal-Eingang 54 verbunden. Ein Widerstand 58 ist der
Basis-Emitter-Strecke des zweiten Transistors 56 parallelgeschaltet. Bei der Schaltungsanordnung 51' gemäß Fig. 8
hingegen ist der Reihenschaltung aus Rest-Erregerspule 20''
und der Diode 55 ein Kondensator 59 parallelgeschaltet.

Wird in der Schaltung gemäß Fig. 7 an den Stoppsignal-
Eingang 54 ein Stoppimpuls in Form eines Spannungssprunges
angelegt, so wird über das RC-Glied 57 der zweite Transistor
56 kurzzeitig durchgeschaltet. Über den abgegriffenen Teil
20' der Erregerspule 20 und den zweiten Transistor 56 fließt
ein Stromimpuls. Dieser Stromimpuls erzeugt in der Rest-
Erregerspule 20'' eine Spannungsspitze, die so gerichtet
ist, daß die Diode 55 die Erregerspule 20 und den ersten
Transistor 52 entkoppelt. Erst nach Abklingen dieser Spannungsspitze wird der erste Transistor 52,an dessen Basis ebenfalls der Spannungssprung liegt,leitend und der Transistor 52 übernimmt den Spulenstrom, während der Transistor 56 sperrt. Diese Beaufschlagung der Erregerspule 20 über die Windungsanzapfung 50 zur Erzeugung einer Spannungsspitze hat bezüglich der Erregungszeit des Elektromagneten 16 dieselbe Wirkung wie das äußere Anlegen einer gleich hohen Spannungsspitze an die Gesamtspule. Der Stromanstieg in der Einschaltphase des Elektromagneten wird damit wesentlich verbessert. Bei einer Versorgungsspannung von ca. 4 V Gleichspannung kann in der Resterregerspule 20'' eine Spannungsspitze von ca. 60 V erzielt werden.

Bei der Schaltung gemäß Fig. 8 wird in gleicher Weise an den Stoppsignal-Eingang 54 ein Stoppsignal in Form eines Spannungssprunges gelegt. Damit wird der Transistor 52 leitend. Im Augenblick des Durchschaltens des Transistors 52 fließt über den zunächst als Kurzschluß wirkenden Kondensator 59 und dem abgegriffenen Teil 20' der Erregerspule 20 ein Stromimpuls, der in der Rest-Erregerspule 20'' eine Spannungsspitze erzeugt, die so gerichtet ist, daß die Diode 55 sperrt und damit die Rest-Erregerspule 20'' von Kondensator 59 und Transistor 52 entkoppelt. Mit zunehmender Aufladung des Kondensators 59 klingt die Spannungsspitze in der Rest-Erregerspule 20''ab,und die Erregerspule 20 ist an die volle Gleichspannung der Stromversorgungsquelle angeschlossen. Um einen ausreichend großen Stromimpuls zu erhalten, muß die Kapazität des Kondensators 59 entsprechend groß bemessen werden. Hierdurch ist die Abklingzeit des Stromflusses durch den Kondensator 59 relativ groß und die Schaltung insgesamt nicht so optimal wie die Schaltung gemäß Fig. 7.

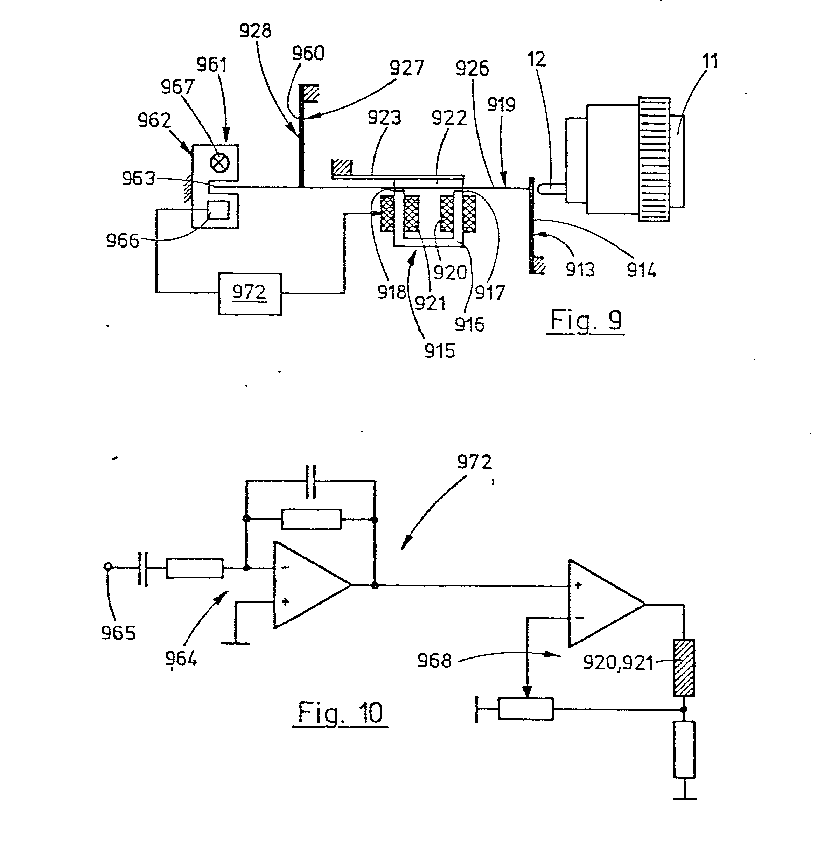

In dem Ausführungsbeispiel einer Antriebsvorrichtung mit Stoppvorrichtung 915 gemäß Fig. 9 sind wiederum Bauelemente, insoweit sie mit Bauelementen gemäß dem Ausführungsbeispiel in Fig. 1 übereinstimmen mit gleichen Bezugzeichen versehen , die um die Zahl 900 erhöht sind. Die Antriebsvorrichtung mit Antriebsglied 913 und die an dem Antriebsglied 913 angreifende Stoppvorrichtung 915 sind identisch mit Fig. 1, so daß hier auf die dortigen Ausführungen verwiesen wird. Die Stoppvorrichtung 915 wird hier aber zusätzlich noch als eine die Antriebsbewegung des Antriebsgliedes 913 regelnde elektromagnetische Bremse verwendet. Mit dieser elektromagnetischen Bremse kann ein bestimmter Verlauf der Blendenöffnungs- bzw. Schließgeschwindigkeit erzeugt werden, der bereits vorstehend schon angesprochen worden ist, wobei das in Fig. 1 beschriebene mechanische Hemmwerk 32 entfallen kann. Dessen Funktion übernimmt nunmehr die Stoppvorrichtung 915, die als elektromagnetisches Hemmwerk anzusehen ist. Auch bei der Stoppvorrichtung 915 ist das Stoppelement 919 als Stoppband 926 ausgebildet, das einerseits an dem als Blattfeder 914 ausgebildeten Antriebsglied 913 und andererseits an dem Spannelement 927 befestigt ist. Das Spannelement 927 ist hier eine einfache Blattfeder 960, die entgegen der Antriebsrichtung des Antriebsgliedes 913 vorgespannt ist. Mit dem Antriebsglied 913 ist ein Geschwindigkeitssensor 961 gekuppelt, der in dem Ausführungsbeispiel gemäß Fig. 9 eine Lichtschranke 962 aufweist. Mit dem Geschwindigkeitssensor 961 und mit den Erregerspulen 920, 921 ist ein Regler 963 verbunden, der entsprechend der gewünschten Antriebsbewegung des Antriebsgliedes 913, die von dem Bewegungsgesetz des Blendenstößels 12 vorgegeben ist, die Größe des Erregerstroms in den Erregerspulen 920, 921 bestimmt. Die Lichtschranke 962 in Fig. 9 tastet eine Fahne 963 ab, die mit dem Stoppband 926 bzw. mit dem Spannelement 927 starr verbunden ist. Der Regler 963, dessen Schaltungsaufbau in Fig. 10 dargestellt ist, weist einen Differenzierer 964 auf, an dessen Eingang 965 der Ausgang des Fotodetektors 966 der Lichtschranke 963 verbunden ist. Wie bei einer Lichtschranke üblich, wird der Fotodektor 966 von einer Lichtquelle 967 beleuchtet, wobei der Lichtstrom durch die Fahne 963 moduliert wird. Der Differenzierer 964 wandelt das von dem Fotodetektor 966 abgegebene Signal in ein geschwindigkeitsproportionales Spannungssignal um. Dieses Spannungssignal wird dem mit dem Ausgang des Differenzierers 964 verbundenen Spannungs-Strom-Wandler 968 zugeführt. Dieser Wandler 968 wandelt das Spannungssignal in einen entsprechenden Erregerstrom für die Erregerspulen 920,921 um, die an den Ausgang des Spannungs-Strom-Wandlers 968 angeschlossen sind. Bei einem Blendeneinstellvorgang bewegt sich die Fahne 963 mit der gleichen Geschwindigkeit wie das frei ablaufende Antriebsglied 913. Am Ausgang des Differenzierers 964 tritt ein Spannungssignal auf, dessen Größe der Zu- bzw. Abnahme des modulierten Lichtstroms proportional ist. Entsprechend diesem Spannungssignal fließt in den Erregerwicklungen 920, 921 ein entsprechend bemessener Erregerstrom, der die geringe, von der Blattfeder 921 über die Ankerplatte 922 auf das Stoppband 926 ausgeübte Anpreßkraft verstärkt und eine Bremsung des zwischen der Ankerplatte 922 und den Magnetpolen 917,918 hindurchgleitenden Stoppbandes 926 verursacht. Je nach Größe des Erregerstroms wird das Stoppband 926 mehr oder weniger stark gebremst, ohne festgeklemmt zu werden. Die Klemmung des Stoppbandes 926 erfolgt in der gleichen Weise,wie in Fig. 1 beschrieben, mit Auftreten des Stoppsignals, das von der Belichtungs- automatik erzeugt wird. Durch entsprechende Formgebung oder Veränderung der Lichtdurchlässigkeit der Fahne 963 wird der geforderte Verlauf der Geschwindigkeit über dem Blendenstößelweg erzielt.

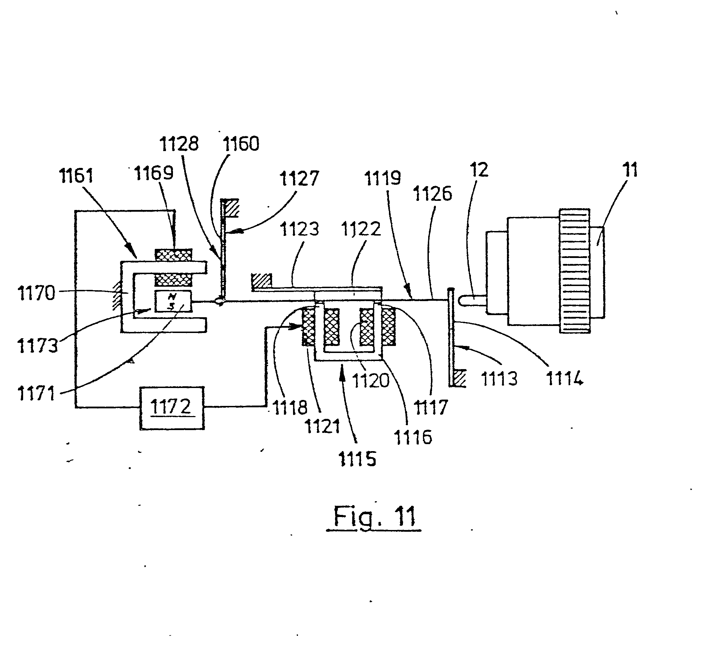

Das Ausführungsbeispiel in Fig. 11 stimmt weitgehend mit dem eben beschriebenen Ausführungsbeispiel gemäß Fig. 9 überein, so daß gleiche Bauelemente wiederum mit gleichen Bezugszeichen versehen sind. Alle Bezugszeichen sind jedoch auf die Basis 1100 bezogen. Die Antriebsvorrichtung mit dem an dem Blendenstößel 12 des Wechselobjektivs 11 anliegendem Antriebsglied 1113 und die Stoppvorrichtung 1115 mit Stoppband 1126 und Spannelement 1127 in Form einer Blattfeder 1160 sind identisch dem Ausführungsbeispiel gemäß Fig. 9 ausgebildet. Auch hier wird die Stoppvorrichtung 1115 als elektromagnetisches Hemmwerk zur Steuerung der Antriebsbewegung des Antriebsgliedes 1113 zusätzlich verwendet.
Der Geschwindigkeitssensor 1161 weist hier im Unterschied
zu dem Ausführungsbeispiel gemäß Fig. 9 ein Flach- oder
Tauchspulsystem 1173 auf, das eine ortsfeste Spule 1169
mit offenem Joch 1170 aufweist. Mit dem Stoppband 1126
bzw. dem Spannelement 1127 ist ein Permanentmagnet 1171
starr verbunden, der in das offene Joch 1170 des Flach-
oder Tauchspulsystems 1173 eintaucht und sich entsprechend
der Geschwindigkeit des Antriebsgliedes 1113 bewegt. Die
Länge des Permanentmagneten 1171 ist vorzugsweise gleich
der Tiefe der Spule 1169 gewählt. Die Spule 1169 ist mit
dem Regler 1172 verbunden, dessen Ausgang an die Erregerspulen 1120 und 1121 des Elektromagneten 1116 angeschlossen
ist.    Da die Spule 1169 bereits ein geschwindigkeitsproportionales Spannungssignal an den Regler 1172 liefert,
weist dieser im wesentlichen nur noch einen Spannungs-Strom-
Wandler auf, der das geschwindigkeitsproportionale Spannungssignal in einen entsprechenden Erregerstrom für die Erregerspulen 1120,1121 umsetzt. Der permanentmagnetische
Kreis des Geschwindigkeitssensors 1161 kann nunmehr derart
ausgebildet sein, daß der Proportionalitätsfaktor zwischen
Geschwindigkeit des Permanentmagneten 1171 und der von der
Spule 1169 gelieferten Spannung eine Funktion des Blendenstößelhubs bzw. der Blendenöffnung ist. Damit läßt sich
in gleicher  Weise wie vorstehend beschrieben eine
Bremsung des Stoppbandes 1126 erreichen, die die Einhaltung
der vorgeschriebenen Blendenbewegung des Wechselobjektivs 11 ermöglicht.

Die Erfindung ist nicht auf die vorstehend beschriebenen
Ausführunsbeispiele beschränkt. Vielmehr können diese in
vielfältiger Weise variiert und ergänzt werden, ohne daß
das Prinzip der Erfindung verlassen wird. So kann z.B. das
Stoppelement 19 als ein in Antriebsrichtung des Blendenstößels 12 geführter Hohlstößel ausgebildet sein, der von
einer in seinem Inneren angeordneten Druckfeder angetrieben wird, die sich am Grund des Hohlstößels und am Kameragehäuse 10 abstützt. Weiterhin können in dem erfindungsgemäßen mechanischen Kraftverstärker, der die Magnetkraft des Elektromagneten unterstützt, anstelle des hier beschriebenen Hebel- oder Schlingbandgetriebes äquivalente Keil- oder Klemmrollengetriebe Verwendung finden. Auch kann der Geschwindigkeitssensor bei der Verwendung der Stoppeinrichtung als elektromagnetisches Hemmwerk z.B. auch als Hallsonde oder als Feldplatten-Sensor ausgebildet werden.

In dem Ausführungsbeispiel gemäß Fig. 9 und 10 kann z.B. auch auf die Bildung eines geschwindigkeitsproportionalen Signals mittels des Differenzierers 964 verzichtet werden, wenn ein direkter Weg-Soll-Ist-Wertvergleich durchgeführt wird. Hierzu ist dem Regler 972 in Fig. 9 eine Funktion des Weges in Abhängigkeit von der Zeit als Führungsgröße zuzuführen. Anstelle des Differenzierers 964 weist der Regler 972 einen Komparator auf, der das von dem Fotodetektor 966 kommende Signal mit dem Sollsignal der Führungsgröße vergleicht. Solange die von der Fahne in der Zeiteinheit durchlaufene Wegstrecke mit der für die entsprechende Zeiteinheit vorgegebene Soll-Wegstrecke übereinstimmt, gibt der Komparator kein Signal an den Spannungs-Strom-Wandler 968 ab. Ist die tatsächliche Wegstrecke der Fahne, die diese, ausgehend von der Startposition, zu dem entsprechenden Zeitpunkt zurückgelegt hat, aber größer, wird in gleicher Weise ein Bremsstrom für den Elektromagneten 916 erzeugt.

Auch kann z.B. in dem Ausführungsbeispiel gemäß Fig. 9 anstelle der analog abgetasteten Fahne 963 eine digital abgetastete Strichscheibe benutzt werden. Zur Erzeugung eines geschwindigkeitsproportionalen Signals ist dann der Differenzierer 964 durch einen Frequenz-Analog-Wandler zu ersetzen.

ROLLEI-WERKE        04.07.1980
   Franke & Heidecke       A 1172 $^{EU}$
    GmbH & Co KG

Patentansprüche

1. Vorrichtung zur Blendensteuerung mittels eines Antriebsgliedes in einer fotografischen Kamera und mit einer das Antriebsglied stillsetzenden Stoppvorrichtung, die einen Elektromagneten mit Magnetpolen und ein mit dem Antriebsglied gekuppeltes Stoppelement aufweist, das sich an den Magnetpolen vorbeibewegt und durch Magneterregung festsetzbar ist, dadurch gekennzeichnet, daß auf der von den Magnetpolen (17, 18; 217, 218; 417, 418; 517, 518; 917, 918; 1117, 1118) abgekehrten Seite des Stoppelements (19; 219; 419; 519; 919; 1119) eine den Magnetpolen unmittelbar gegenüberliegende Ankerplatte (22; 222; 422; 522; 922; 1122) beweglich angeordnet ist, und daß die im wesentlichen quer zur Ankerplattenfläche sich erstreckende Abmessung des Stoppelements sehr klein, vorzugsweise auf ein nur von der mechanischen Festigkeit begrenztes Maß reduziert, ist.

2. Vorrichtung nach Anspruch 1, dadurch gekennzeichnet, daß das Stoppelement (19; 419; 519; 919; 1119) unmittelbar mit dem Antriebsglied (13; 213; 913; 1113) fest verbunden ist.

3. Vorrichtung nach Anspruch 1 oder 2, dadurch gekennzeichnet, daß die Ankerplatte (22; 222; 422; 522; 922; 1122) mit Vorspannung an dem Stoppelement (19; 219; 419; 519; 1119) anliegt und vorzugsweise, daß die Vorspannkraft für die Ankerplatte (22; 222; 422; 522; 922; 1122) sehr klein gewählt ist.

4. Vorrichtung nach einem der Ansprüche 1-3, d a - d u r c h   g e k e n n z e i c h n e t , daß das Stoppelement (19; 219; 419; 519; 919; 1119) mindestens ein gespanntes, unelastisches, dünnes Stoppband (26; 226, 226'; 426; 526; 926; 1126), vorzugsweise aus metallischem Material mit ferromagnetischen Eigenschaften, aufweist, das mit einem Ende an dem Antriebsglied (13; 213; 913; 1113) gehalten ist.

5. Vorrichtung nach Anspruch 4, d a d u r c h   g e - k e n n z e i c h n e t , daß am anderen Endes des Stoppbandes (26; 226, 226'; 426; 526; 926; 1126) ein das Stoppband straffhaltendes Spannelement (27; 227; 927; 1127) angreift und der Elektromagnet (16; 216; 416; 516; 916; 1116) mit Ankerplatte (22; 222; 422; 522; 922; 1122) räumlich zwischen Antriebsglied (13; 213; 913; 1113) und Spannelement angeordnet ist.

6. Vorrichtung nach Anspruch 4 oder 5, d a d u r c h   g e k e n n z e i c h n e t , daß das Antriebsglied (13; 213; 913; 1113) als in Antriebsrichtung vorgespannte Antriebsschwinge (240), vorzugsweise Blattfeder (14; 914; 1114), ausgebildet ist.

7. Vorrichtung nach Anspruch 6, d a d u r c h   g e - k e n n z e i c h n e t , daß das Spannelement (27; 227; 927; 1127) ein Federelement (28; 928; 1128) aufweist, dessen Federkraft kleiner als die Vorspannkraft der Antriebsschwinge (240), vorzugsweise Blattfeder (14; 914; 1114), und dieser entgegengerichtet ist.

8. Vorrichtung nach einem der Ansprüche 1-7, g e - k e n n z e i c h n e t   d u r c h  ein die Antriebsbewegung des Antriebsgliedes (13; 213) steuerndes Hemmwerk (32; 232).

9. Vorrichtung nach Anspruch 4 und 8, d a d u r c h g e k e n n z e i c h n e t , daß das Hemmwerk (32; 232) unmittelbar oder über das Stoppband (26; 226) an dem Antriebsglied (13; 213) angreift.

10. Vorrichtung nach Anspruch 7 und 9, d a d u r c h g e k e n n z e i c h n e t , daß das Federele-ment (28; 228) auf einem in Antriebsrichtung der Antriebsschwinge (240), vorzugsweise Blattfeder (14), vorgespannten Schwenkhebel (29; 229) angeordnet ist, der an einer Steuerkurve (31; 231) des Hemmwerks (32; 232) anliegt.

11. Vorrichtung nach Anspruch 10, d a d u r c h  g e - k e n n z e i c h n e t , daß das Federelement (28; 228) als Blattfeder (34; 234) ausgebildet ist, die mit einem Ende auf der von der Antriebsschwinge (240), vorzugsweise Blattfeder (14), abgekehrten Seite des Schwenkhebels (29; 229) an dieser befestigt und mit dem anderen, freien Ende von diesem absteht, und daß das Stoppband (26; 226) durch eine Durchtrittsöffnung (35, 235) im Schwenkhebel hindurchgeführt und an dem freien Ende der Blattfeder gehalten ist.

12. Vorrichtung nach einem der Ansprüche 4-11, d a - d u r c h g e k e n n z e i c h n e t , daß das Stoppelement (219) mehrere Stoppbänder (226, 226') aufweist, die parallel zu den Polflächen (224, 225) der Magnetpole (217, 218) in Abstand voneinander angeordnet sind, und daß zwischen den Stoppbändern im Bereich der Magnetpole Flußleitstücke (236, 237) aus weichmagnetischem Material angeordnet sind.

13. Vorrichtung nach Anspruch 12, d a d u r c h g e - k e n n z e i c h n e t , daß die Stoppbänder (226, 226') über mindestens ein, vorzugsweise als feste Rolle (238) ausgebildet, mechanisches Differential (239) miteinander verbunden sind, das an dem Antriebsglied (213) und/oder an dem Spannelement (227) gehalten ist.

14. Vorrichtung nach einem der Ansprüche 1-13, d a - d u r c h g e k e n n z e i c h n e t , daß ein die Magnetkraft des Elektromagneten (416; 516) unterstützender mechanischer Kraftverstärker (442; 542) vorgesehen ist.

15. Vorrichtung nach einem der Ansprüche 4-13 und Anspruch 14, d a d u r c h g e k e n n z e i c h - n e t , daß die Ankerplatte (422) auf einem ortsfesten schwenkbeweglich gelagerten Stützhebel (443) gelenkig angeordnet ist, der unter einem spitzen Winkel ( ' ) zur Längsrichtung des Stoppbandes (426) gegen dessen Bewegungsrichtung geneigt ist.

16. Vorrichtung nach einem der Ansprüche 4-13 und Anspruch 14, d a d u r c h g e k e n n z e i c h - n e t , daß der Elektromagnet (516) ein zylindrisches, geschlitztes Joch (546) mit im Jochschlitz (547) einander gegenüberliegenden Polflächen (524, 525) aufweist, daß das Stoppband (526) in Form eines Schlingbandes mit vorzugsweise einem Schlingwinkel größer als 360$^o$ um das Joch gelegt ist und daß die Ankerplatte (522) am Umfang des Jochs, den Jochschlitz überdeckend, auf dem auf das Joch auflaufenden Teil des Stoppbandes aufliegt.

17. Vorrichtung zur Blendensteuerung mittels eines Antriebsgliedes in einer fotografischen Kamera und mit einer das Antriebsglied stillsetzenden Stoppvorrichtung, die einen Elektromagneten mit Magnetpolen, mit einer an eine Stromversorgungsquelle mit vorgegebener Gleichspannung anschließbaren Erregerspule und ein mit dem Antriebsglied gekuppeltes Stoppelement aufweist, das sich an den Magnetpolen vorbeibewegt und durch Magneterregung festsetzbar ist, insbesondere nach einem der Ansprüche 1-16, d a d u r c h   g e -
k e n n z e i c h n e t , daß die Erregerspule mit einer Windungsanzapfung (50) versehen ist, und daß eine Schaltungsanordnung (51; 51') vorgesehen ist, die bei Auftreten eines Stoppsignals für den Elektromagneten (16) den über die Windungsanzapfung abgegriffenen Teil (20') der Erregerspule (20) kurzzeitig an die volle Gleichspannung legt.

18. Vorrichtung nach Anspruch 17, d a d u r c h   g e -
k e n n z e i c h n e t , daß die Erregerspule (20) in Reihe mit einem Transistor (52) an die Stromversorgungsquelle angeschlossen ist, daß die Basis des Transistors, vorzugsweise über einen Widerstand (53), mit einem Stopp-Eingang (54) verbunden ist, und daß die Schaltungsanordnung (51) eine zwischen der Erregerspule (20) und dem Transistor (52) eingeschaltete Diode (55) und einem zweiten Transistor (56) aufweist, der der Reihenschaltung aus Rest-Erregerspule (20"), Diode (55) und erstem Transistor (52) parallel geschaltet ist und dessen Basis über ein RC-Glied (57) an den Stoppsignal-Eingang angeschlossen ist.

19. Vorrichtung nach Anspruch 17, d a d u r c h   g e - k e n n z e i c h n e t , daß die Erregerspule (22) in Reihe mit einem Transistor an die Stromversorgungsquelle angeschlossen ist, daß die Basis des Transistors (52), vorzugsweise über einen Widerstand (53), mit einem Stoppsignal-Eingang (54) verbunden ist und daß die Schaltungsanordnung (51') eine zwischen der Erregerspule (20) und dem Transistor (52) eingeschaltete Diode (55) und einem Kondensator (59) aufweist, der der Reihenschaltung aus Rest-Erregerspule (20") und Diode (55) parallel geschaltet ist.

20. Vorrichtung zur Blendensteuerung mittels eines Antriebsgliedes in einer fotografischen Kamera und mit einer das Antriebsglied stillsetzenden Stoppvorrichtung, die einen Elektromagneten mit Magnetpolen, mit einer an eine Stromversorgungsquelle mit vorgegebener Gleichspannung anschließbaren Erregerspule und ein mit dem Antriebsglied gekuppeltes Stoppelement aufweist, das sich an den Magnetpolen vorbeibewegt und durch Magneterregung festsetzbar ist, insbesondere nach einem der Ansprüche 1-7 oder Ansprüche 12-19, g e k e n n z e i c h n e t d u r c h  die zusätzliche Verwendung der Stoppvorrichtung (915; 1115) als eine die Antriebsbewegung des Antriebsgliedes (913; 1113) regelnde elektromagnetische Bremse.

21. Vorrichtung nach Anspruch 20, d a d u r c h  g e -
k e n n z e i c h n e t , daß mit dem Antriebsglied (913; 1113) ein Geschwindigkeitssensor (961;
1161) gekuppelt ist und daß mit diesem und der Erregerspule (920, 921; 1120, 1121) des Elektromagneten (916; 1116) ein Regler (972; 1172) verbunden
ist, der entsprechend der gewünschten Antriebsbewegung des Antriebsgliedes (913; 1113) die Größe
des Erregerstromes in der Erregerspule (920, 921;
1120, 1121) bestimmt.

22. Vorrichtung nach Anspruch 21, d a d u r c h  g e -
k e n n z e i c h n e t , daß der Geschwindigkeitssensor (916) eine Lichtschranke (962), welche die
Bewegung einer mit dem Antriebsglied (913) gekuppelten, vorzugsweise mit dem Stoppband (926) verbundenen, Fahne (963) abtastet, und der Regler (972) einen
Differenzierer (964) und einen an dessen Ausgang angeschlossenen Spannungs-Stromwandler (968) aufweist,
dessen Ausgang mit der Erregerspule (920, 921) verbunden ist.

23. Vorrichtung nach Anspruch 21, d a d u r c h  g e -
k e n n z e i c h n e t , daß der Geschwindigkeitssensor (1161) eine geschwindigkeitsproportionale
Spannung liefert, wobei der Proportionalitätsfaktor
einer Funktion des Verstellweges der Objektivblende
ist.

24. Vorrichtung nach Anspruch 23, d a d u r c h  g e -
k e n n z e i c h n e t , daß der Geschwindigkeitssensor (1161) ein Flach- oder Tauchspulensystem (1173) mit einer ortsfesten Spule (1169) und
einem mit dem Antriebsglied (1113) gekuppelten, vorzugsweise mit dem Stoppband (1126) verbundenen Perma-

0026273

nentmagneten (1171) oder umgekehrt aufweist, daß an der Spule (1179) eine der Geschwindigkeit des Antriebsglieds (1113) proportionale Spannung abgegriffen und dem Regler (1172) zugeführt wird und daß der permanentmagnetische Kreis derart ausgebildet ist, daß der Proportionalitätsfaktor eine Funktion des Verstellweges der Objektivblende ist.

Fig. 1

Fig. 2

Fig. 3

Fig. 4

Fig. 5

Fig. 6

Fig. 7

Fig. 8

Fig. 9

Fig. 10

0026273

Fig. 11